Europäisches Patentamt

European Patent Office

Office européen des brevets

(11) Veröffentlichungsnummer: **0 100 887**
**B1**

## EUROPÄISCHE PATENTSCHRIFT

(45) Veröffentlichungstag der Patentschrift:
**22.06.88**

(21) Anmeldenummer: **83106715.2**

(22) Anmeldetag: **08.07.83**

(51) Int. Cl.⁴: **G 01 S 7/02**

(54) **Rauscharmes Radargerät.**

(30) Priorität: **06.08.82  CH 4749/82**

(43) Veröffentlichungstag der Anmeldung:
**22.02.84 Patentblatt 84/8**

(45) Bekanntmachung des Hinweises auf die Patenterteilung:
**22.06.88 Patentblatt 88/25**

(84) Benannte Vertragsstaaten:
**CH DE GB IT LI NL**

(56) Entgegenhaltungen:
**EP - A - 0 083 895**
**US - A - 2 483 187**
**US - A - 2 959 778**
**US - A - 3 019 431**
**US - A - 3 047 859**

(73) Patentinhaber: **SIEMENS-ALBIS
AKTIENGESELLSCHAFT, EGA1/Verträge und Patente
Postfach, CH-8047 Zürich (CH)**

(72) Erfinder: **Schenkel, Paul, Im Spannrain 20, CH-8105 Watt
(CH)**

**Beschreibung**

Die vorliegende Erfindung betrifft ein Radargerät gemäss dem Oberbegriff des Patentanspruchs 1.

Ein solches Radargerät ist beispielsweise aus US-A-2 483 187 bekannt. In derartigen Radargeräten werden vielfach sogenannte TR- oder Sende/Empfangs-Umschalter eingesetzt, mit deren Hilfe die Antenne entweder an den Sender oder an den Empfänger angeschlossen wird, um wiederholt kurze, jedoch sehr starke Impulssignale zu senden und dann die schwachen Echosignale zu empfangen. Da solche TR-Umschalter keine ideale Umschaltungscharakteristik aufweisen, gelangt immer ein kleiner Teil des Impulssendesignals zum Empfänger, was unerwünscht ist. Zum Schutz des Empfängers vor direkt in den Empfänger eingekoppelten Anteilen der Sendeimpulse weist das bekannte Radargerät eine Schutzschaltung auf, welche eine zwischen den Zwischenfrequenzausgang eines Mischers und ein Bezugspotential geschaltete Serienschaltung umfasst, die aus einer Impedanz und einer Schalteinheit besteht und zur Veränderung des Arbeitspunkts der Mischerdiode jeweils während der Senderimpulseinkopplung dient. Bei einem Radargerät der eingangs erwähnten Art stellt sich die Aufgabe, die Mischerdiode von solchen eingekoppelten Anteilen der Senderimpulse zu schützen, weil sonst die Funktion der Dioden im nachgeschalteten Mischer beeinträchtigt und dadurch die Rauschzahl stark verschlechtert wird. Um diesem Nachteil entgegenzuwirken, ist es bekannt, im Mischer ausgesuchte TR-Umschalter und/oder Dioden zu verwenden.

Demgegenüber zeigt die Erfindung eine einfache Massnahme gemäss kennzeichnendem Teil des Anspruchs 1, um diesen Nachteil zu beheben.

Die Erfindung wird nun durch Ausführungsbeispiele und Zeichnungen näher beschrieben. Dabei zeigt:

Fig. 1 das Blockschaltbild eines Radargerätes mit einer durch einen Impulserzeuger (IE) gesteuerten Mischerschaltung (MS) nach der Erfindung,

Fig. 2 ein die Erzeugung des Steuersignals (w) der Mischerschaltung (MS) erläuterndes Diagramm, und

Fig. 3 das Schaltbild zweier umschaltbarer Stromquellenschaltungen in der Mischerschaltung (MS).

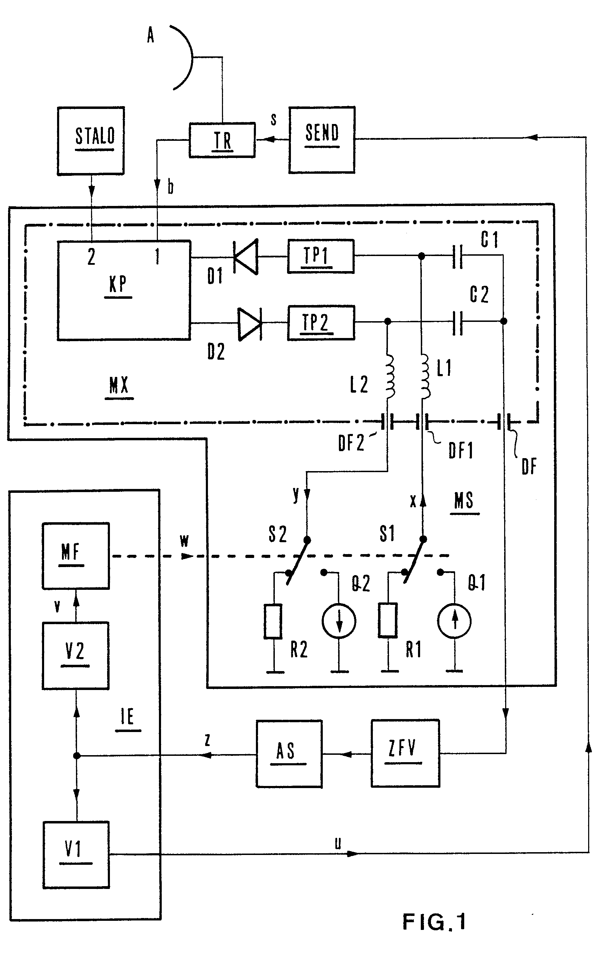

Das Radargerät nach Fig. 1 weist einen TR-Umschalter TR auf, mit dessen Hilfe die Antenne A entweder an einen Sender SEND oder an den ersten Eingang eines Kopplers KP angeschlossen werden kann, dessen zweiter Eingang mit dem Ausgang eines stabilen Oszillators STALO verbunden ist. Der Koppler KP bildet zusammen mit zwei Mischerdioden D1, D2, zwei Mikrowellen-Tiefpassfiltern TP1, TP2, zwei Induktivitäten L1, L2 und zwei Kondensatoren C1, C2 einen in einer abgeschirmten Kapsel eingeschlossenen Mischer MX. Dabei ist ein erster Ausgang des Kopplers KP über die Reihenschaltung der Diode D1, der Elemente TP1 und L1 und eines Durchführungskondensators DF1 an den Kontaktarm eines Umschalters S1 angeschlossen. Der zweite Ausgang des Kopplers KP ist ebenfalls über die Reihenschaltung entsprechender Elemente D2, TP2, L2 und DF2 an den Kontaktarm eines weiteren Umschalters S2 angeschlossen, wobei aber diese zweite Diode D2 in der umgekehrten Richtung gepolt ist. Anstelle der Induktivitäten L1 bzw. L2 können auch Impedanzen oder Widerstände eingesetzt werden. Vorzugsweise können die Dioden D1 und D2 gepaart sein (matched diodes).

Der Mischer MX bildet zusammen mit den Umschaltern S1, S2, sowie mit zwei Widerständen R1, R2 und zwei Stromquellenschaltungen Q1, Q2 eine Mischerschaltung MS. Dabei ist der Kontaktarm des Umschalters S1 entweder über den Widerstand R1 oder über die Stromquelle Q1 an ein Bezugspotential verbindbar. Entsprechendes gilt für den Kontaktarm des Umschalters S2 und die Elemente R2 und Q2, wobei aber der Strom durch die Quellen Q1 und Q2 der Polung der Dioden D1 und D2 entsprechend in entgegengesetzten Richtungen fliesst. Dem Mischer MX ist ein Zwischenfrequenzverstärker ZFV nachgeschaltet, dessen Eingang über eine Durchführung DF einerseits über den Kondensator C1 mit dem Ausgang des Tiefpasses TP1 und andererseits über den Kondensator C2 mit dem Ausgang des Tiefpasses TP2 verbunden ist. Als Bezugspotential kommen eine gemeinsame Erdung oder spezielle Referenzspannungen für die Elemente R1, Q1, R2 und Q2 in Betracht.

Die Auswerteschaltung AS des Radargerätes ist eingangsseitig mit dem Ausgangssignal des Verstärkers ZFV beaufschlagt und liefert ausgangsseitig ein zusätzliches Signal z der Pulsrepetitionsfrequenz prf. Dieses Signal z wird einerseits über eine Verzögerungsschaltung V1 dem Eingang des Senders SEND und andererseits über eine Verzögerungsschaltung V2 dem Eingang einer monostabilen Kippstufe MF zugeführt, mit deren Ausgangssignal w die Umschalter S1 und S2 gesteuert werden. Die Elemente V1, V2 und MF bilden einen Impulserzeuger IE.

Das Radargerät nach Fig. 1 funktioniert im Prinzip in bekannter Weise, unabhängig davon, ob es sich um ein Kegelabtast- (conical-scan) oder um ein Monopulsradar handelt; gegebenenfalls könnte es auch mit Quadraturkanälen arbeiten. Insbesondere wird der erste Eingang des Kopplers KP auch regelmässig mit vom Sender kommenden Störsignalen b (Zacken oder Spikes) beaufschlagt, deren Störeffekt vermieden werden soll.

Die in der Mischerschaltung MS dieses Radargerätes noch zusätzlich vorhandenen Umschalter S1, S2 werden jedoch durch das Signal w derart gesteuert, dass die Stromquellen Q1, Q2 immer wieder jeweils für eine kurze Zeit t eingeschaltet werden, während der relativ grosse Ströme I1 und I2 durch die Dioden D1 bzw. D2 in Durchlassrichtung fliessen. Da die Zeit t viel kürzer als die Periode T des Sendesignals s mit der Pulsrepetitionsfrequenz prf ist, sind die Dioden D1 und D2 durch die Ströme I1 und I2 nicht gefährdet. Die Signale w, s und b verlaufen synchron, wobei aber das Signal w die Signale s und b zeitlich überlappt. Wenn nun während der Zeit t, in der die Ströme I1 und I2 durch die Dioden D1 bzw. D2 fliessen, ein Zacken b auf den Eingang des Kopplers KP gelangt, so wird der Zacken b von den Dioden reflektiert und nicht mehr absorbiert, wie es der Fall sein würde, wenn keine Ströme I1 und I2 vorhanden wären. Dies ist darauf zurückzuführen, dass im Gegensatz zum Empfangsbetrieb, bei dem eine optimale Anpassung angestrebt wird, beim Sendebetrieb die Mischerdioden absichtlich mit einem grossen sogenannten VSWR-Wert, das heisst relativ schlecht an den Koppler KP angepasst sind, um den Störeffekt der Zacken b möglichst gering zu halten.

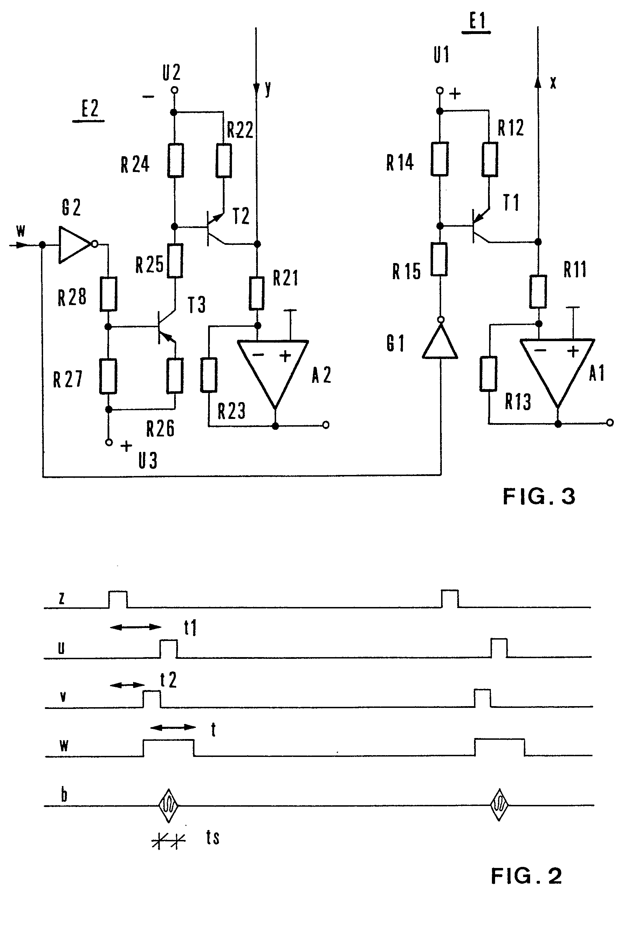

In Fig. 2 ist der zeitliche Verlauf der Signale z, u, v, w und b dargestellt. Das von der Auswerteschaltung gelieferte Signal z mit der Frequenz prf wird durch die Schaltung V1 um eine Zeit t1 verzögert und gelangt als Signal u zum Steuereingang des Senders SEND, indem es mit seiner Anstiegsflanke die Signale s und b auslöst. Das Signal z wird auch durch die Schaltung V2 verzögert, jedoch um eine Zeit t2, die kleiner als t1 ist, und gelangt als Signal v zum Eingang der monostabilen Kippstufe MF, indem es mit seiner Anstiegsflanke einen Impuls w der Dauer t auslöst. Dabei kann auch t2 = 0 sein. Es gibt jedoch auch noch andere Möglichkeiten, beispielsweise mit Logikschaltungen, um ein Signal w zu erzeugen, das den Zacken b überlappt.

Die Stromquellen Q1 und Q2 können in bekannter Weise mit Hilfe von Spannungsquellen und nachgeschalteten Widerständen realisiert werden. Fig. 3 zeigt eine weitere Möglichkeit, die von den Elementen S1, Q1, R1 und/oder S2, Q2, R2 gebildeten Einheiten mit Hilfe von elektronischen Bauteilen E1 bzw. E2 zu realisieren.

Die Einheit E1 weist einen Operationsverstärker A1 auf, dessen invertierender Eingang über die Reihenschaltung eines Widerstandes R11, der Kollektor-Emitter-Strecke eines pnp-Transistors T1 und eines Widerstandes R12 an eine positive Spannungsquelle U1 angeschlossen ist, wobei zwischen dem invertierenden Eingang und dem Ausgang des Operationsverstärkers A1 ein weiterer Widerstand R13 und zwischen der Spannungsquelle U1 und der Basis des Transistors T1 ein weiterer Widerstand R14 eingefügt ist. Dabei ist der Kollektor des Transistors T1 mit dem Ausgangsanschluss der Induktivität L1 verbunden. Zur Steuerung der Einheit E1 wird das Signal w über die Reihenschaltung eines Inverters G1 und eines Widerstandes R15 der Basis des Transistors T1 zugeführt.

Die Einheit E2 weist ebenfalls einen Operationsverstärker A2, vier Widerstände R21, R22, R23, R24, einen Transistor T2 und eine Spannungsquelle U2 als Elemente auf, die in gleicher Weise wie ihre homologen der Einheit E1 unter sich und mit der Induktivität L2 geschaltet sind, wobei es sich hier aber um einen npn-Transistor T2 und um eine negative Spannungsquelle – U2 handelt. Zudem ist die Basis des Transistors T2 über die Reihenschaltung eines Widerstandes R25, der Kollektor-Emitter-Strecke eines weiteren pnp-Transistors T3 und eines Widerstandes R26 an eine weitere positive Spannungsquelle + U3 angeschlossen, indem zwischen dieser und der Basis des Transistors T3 ein weiterer Widerstand R27 eingefügt ist. Zur Steuerung der Einheit E2 wird das Signal w über die Reihenschaltung eines Inverters G2 und eines Widerstandes R28 der Basis des Transistors T3 zugeführt.

Die Einheiten E1 und E2 funktionieren in der Weise, dass für w = 0 die Transistoren T1 und T2 sperren, so dass der invertierende Eingang der Operationsverstärker als virtuelle Erde wirkt. Der Widerstand R11 (Fig. 3) ist daher dem Widerstand R1 (Fig. 1) äquivalent. Entsprechendes gilt für die Widerstände R21 (Fig. 3) und R2 (Fig. 1). Für w = 1 arbeiten die Transistoren zumindest angenähert als Stromquellen. Da die Widerstände R11 und R21 kleinere Widerstandswerte als die Widerstände R13 und R23 aufweisen, sind die Operationsverstärker übersteuert, so dass nur ein sehr kleiner Strom durch die Reihenschaltung der Widerstände R11, R13 bzw. R21, R23 fliesst. Als Einheit E1 oder E2 können auch andere umschaltbare Schaltungen beliebiger Art eingesetzt werden, z. B. eine Stromquellenschaltung oder eine Spannungsquelle mit oder gegebenenfalls ohne Vorwiderstand, oder eine Schaltung mit Energie speichernden Elementen. Bei gewissen Typen von Radargeräten sind mehrere solcher Einheiten oder Schaltungen notwendig, von denen mindestens eine nach der Erfindung und die anderen nach dem Stand der Technik vorgesehen sein können.

Der Ausgang des Operationsverstärkers A1 kann mit dem Eingang eines Schwellenwertschalters verbunden sein, dessen Ausgangssignal zur Kontrolle der gemeinsamen Arbeitsweise des Oszillators STALO (Fig. 1) und der Diode D1 dient. Entsprechendes gilt für einen weiteren an den Ausgang des Operationsverstärkers A2 angeschlossenen Schwellenwertschalter. Ein aktives Ausgangssignal an beiden Schwellenwertschaltern zeigt somit, dass der Oszillator und die Dioden richtig arbeiten. Ein Ausfall des aktiven Ausgangssignals an nur einem Schwellenwertschalter bedeutet, dass die ihm zugeordnete Diode D1 oder D2 nicht funktioniert. Ein Ausfall beider aktiven Signale ist im Prinzip ein Zeichen dafür, dass beide Dioden D1 oder D2 und/oder der Oszillator ausgefallen sind.

**Patentansprüche**

1. Radargerät mit einer Antenne (A), einem Sender (SEND) zur Erzeugung von hochfrequenten Impulsen, einem Empfänger und einem TR-Umschalter (TR), über den die Antenne wechselweise an den Sender und den Empfänger angeschlossen ist, wobei der Empfänger folgende Bestandteile umfasst:
(i) einen stabilisierten Oszillator (STALO),
(ii) einen Mischer (MX) bestehend aus einem Koppler (KP) zur Überlagerung des Ausgangssignals des Oszillators mit vom TR-Umschalter gelieferten Empfangssignalen und einer an den Ausgang des Kopplers angeschlossenen Mischerdiode (D1; D2),

(iii) einen an den Zwischenfrequenzausgang des Mischers angeschlossenen Zwischenfrequenzverstärker (ZFV),

(iv) eine dem Zwischenfrequenzverstärker nachgeschaltete Auswerteschaltung (AS),

(v) eine zum Schutz des Empfängers vor direkt in den Empfänger eingekoppelten Anteilen der Senderimpulse dienende Schutzschaltung, welche eine zwischen den Zwischenfrequenzausgang des Mischers und ein Bezugspotential geschaltete Serienschaltung aus einer Impedanz (L1; L2) und einer Schalteinheit (S1, R1, Q1; S2, R2, Q2) zur Veränderung des Arbeitspunkts der Mischerdiode jeweils während der Senderimpulseinkopplung aufweist, dadurch gekennzeichnet, dass

a) die Schalteinheit eine Stromquellenschaltung (Q1; Q2) und einen Widerstand (R1; R2) sowie einen Umschalter (S1; S2) umfasst, der so ausgebildet und gesteuert ist, dass er die Impedanz (L1; L2) jeweils zu den Zeiten, zu denen Anteile der Senderimpulse in den Empfänger eingekoppelt werden, über die Stromquellenschaltung (Q1; Q2) und ansonsten über den Widerstand (R1; R2) mit dem Bezugspotential verbindet, und

b) die Stromquellenschaltung (Q1; Q2) so ausgebildet ist, dass der von ihr während der Anschaltung an die Impedanz durch die Mischerdiode erzeugte Vorwärtsstrom grösser ist als der während der Verbindung der Impedanz mit dem Widerstand durch die Mischerdiode fliessende Vorwärtsstrom und einen Wert hat, bei dem eine weitgehende Reflexion der in den Empfänger eingekoppelten Senderimpulsanteile an der Mischerdiode bewirkt wird.

2. Radargerät nach Anspruch 1, dadurch gekennzeichnet, dass die Impedanz (L1) einen über einen Kondensator (C1) mit dem Eingang des Zwischenfrequenzverstärkers (ZFV) verbundenen Anschluss aufweist, und dass der Mischer (MX) eine weitere Mischerdiode (D2; D1) aufweist, die bezüglich der genannten Mischerdiode mit entgegengesetzter Polung zwischen den Koppler (KP) und eine mit der genannten Schalteinheit baugleiche weitere Schalteinheit (S2, R2, Q2; S1, R1, Q1) gelegt ist, die andererseits ebenfalls an das Bezugspotential angeschlossen ist und deren Impedanz (L2; L1) über einen weiteren Kondensator (C2) an den Eingang des Zwischenfrequenzverstärkers (ZFV) angeschlossen ist.

3. Radargerät nach Anspruch 1 oder 2, dadurch gekennzeichnet, dass in der Auswerteschaltung (AS) ein Signalgenerator vorhanden ist, dessen Ausgangssignal (z), das die Pulsrepetitionsfrequenz (prf) aufweist, einerseits über eine Verzögerungsschaltung (V1) dem Steuereingang des Senders (SEND) und andererseits dem Eingang einer monostabilen Kippstufe (MF) zugeführt wird, deren Ausgangssignal (w) den Umschalter (S1; S2) steuert.

4. Radargerät nach Anspruch 3, dadurch gekennzeichnet, dass der Kippstufe (MF) eine zweite Verzögerungsschaltung (V2) vorgeschaltet ist.

5. Radargerät nach einem der Ansprüche 1 bis 4, dadurch gekennzeichnet, dass die Zeit (t), während der die Stromquellenschaltung als Stromquelle (Q1 bzw. Q2) wirksam ist, die Impulszeit (ts) des Sendesignals (s) voll einschliesst.

**Claims**

1. A radar device comprising an antenna (A), a transmitter (SEND) for the generation of highfrequency pulses, a receiver and a TR change-over switch (TR) via which the antenna is alternately connected to the transmitter and to the receiver, where the receiver comprises the following components:

(i) a stabilised oscillator (STALO),

(ii) a mixer (MX) consisting of a coupler (KP) which superimposes the output signal from the oscillator with received signals supplied by the TR change-over switch, and a mixer diode (D1; D2) coupled to the output of the coupler,

(iii) an intermediate frequency amplifier (ZFV) connected to the intermediate frequency output of the mixer,

(iv) a signal processing unit (AS) connected to the output of the intermediate frequency amplifier,

(v) a protective circuit which protects the receiver from components of the transmitter pulses which are directly input-coupled into the receiver and which comprises a series arrangement of an impedance (L1; L2) and a switching unit (S1, R1, Q1; S2, R2, Q2) connected between the intermediate frequency output of the mixer and a reference potential, which switching unit serves to change the operating point of the mixer diode during the input-coupling of each transmitter pulse, characterised in that

a) the switching unit comprises a current source circuit (Q1; Q2), a resistor (R1; R2) and a change-over switch (S1; S2) which is designed and controlled in such manner that it connects the impedance (L1; L2) to the reference potential via the current source circuit (Q1; Q2) at those times at which components of the transmitter pulses are input-coupled into the receiver and otherwise connects the impedance to the reference potential via the resistor (R1; R2); and

b) the current source circuit (Q1; Q2) is designed to be such that the forwards current which it generates, during its connection to the impedance, through the mixer diode is greater than the forwards current which flows through the mixer diode during the connection of the impedance to the resistor, and has a value at which the transmitter pulse components which are input into the receiver are largely reflected by the mixer diode.

2. A radar device as claimed in Claim 1, characterised in that the impedance (L1) has a terminal which is connected via a capacitor (C1) to the input of the intermediate frequency amplifier (ZFV) and that the mixer (MX) includes a further mixer diode (D2; D1) which is arranged with the opposite polarity to the aforementioned mixer diode between the coupler (KP) and a further switching unit (S2, R2, Q2; S1, R1, Q1) of identical construction to the aforementioned switching unit, and which on the other hand is likewise connected to the reference potential and whose impedance (L2; L1) is connected via a further capacitor (C2) to the input of the intermediate frequency amplifier (ZFV).

3. A radar device as claimed in Claim 1 or 2, characterised in that the signal processing unit (AS) includes a signal generator whose output signal (z), which has the pulse repetition frequency (prf), is supplied on the one hand via a delay circuit (V1) to the control input of the transmitter (SEND) and on the other hand to the input of a monostable flip-flop (MF) whose output signal (w) controls the change-over switch (S1; S2).

4. A radar device as claimed in Claim 3, characterised in that the flip-flop (MF) is preceded by a second delay circuit (E2).

5. A radar device as claimed in one of the Claims 1 to 4, characterised in that the time interval (t) during which the current source circuit operates as current source (Q1 and Q2) completely includes the pulse time (ts) of the transmitted signal (s).

**Revendications**

1. Dispositif radar qui comporte une antenne (A), un émetteur (SEND) destiné à générer des impulsions haute-fréquence, un récepteur et un commutateur-TR (TR), au moyen duquel l'antenne est raccordée alternativement à l'émetteur et au récepteur, le récepteur comprenant les parties constitutives suivantes:
(i) un oscillateur stabilisé (STALO);
(ii) un mélangeur (MX) qui se compose d'un coupleur (KP), destiné à superposer le signal de sortie de l'oscillateur aux signaux de réception délivrés par le commutateur-TR, et d'une diode de mélange (D1; D2) raccordée à la sortie du coupleur;
(iii) un amplificateur de fréquence intermédiaire (ZFV) raccordé à la sortie de fréquence intermédiaire du mélangeur;
(iv) un circuit d'évaluation (AS) connecté en aval de l'amplificateur de fréquence intermédiaire;
(v) un circuit de protection servant à protéger le récepteur de parties des impulsions d'émission, alimentant directement le récepteur, circuit qui présente, connecté entre la sortie de fréquence intermédiaire du mélangeur et un potentiel de référence, un circuit série d'une impédance (L1; L2) et d'une unité de commutation (S1, R1, Q1; S2, R2, Q2), destiné à modifier le point de fonctionnement de la diode mélangeuse à chaque fois pendant l'alimentation d'impulsion d'émission, caractérisé en ce que
(a) l'unité de commutation comprend un circuit à source de courant (Q1; Q2) et une résistance (R1; R2) ainsi qu'un commutateur (S1; S2), qui est réalisé et commandé de manière à ce qu'il porte l'impédance (L1, L2), au potentiel de référence, par l'intermédiaire du circuit à sources de courant (Q1; Q2), à chaque fois pendant les temps où des parties des impulsions d'émission alimentent le récepteur, et sinon par l'intermédiaire de la résistance (R1; R2); et
(b) le circuit à source de courant (Q1; Q2) est réalisé de manière à ce que le courant direct à travers la diode mélangeuse générée par celui-ci, pendant la connexion à l'impédance, est plus fort que le courant direct circulant à travers la diode de mélange, pendant la liaison de l'impédance avec la résistance, et a une valeur à laquelle une réflexion ample des parties d'impulsions d'émission alimentant le récepteur, est effectuée sur la diode de mélange.

2. Dispositif radar selon la revendication 1, caractérisé en ce que l'impédance (L1) présente une borne reliée, par l'intermédiaire d'un condensateur (C1), à l'entrée de l'amplificateur de fréquence intermédiaire (ZFV), et que le mélangeur (MX) présente une autre diode mélangeuse (D2; D1), qui est placée par rapport à ladite diode de mélange avec la polarité opposée, entre le coupleur (KP) et une autre unité de commutation (S2, R2, Q2; S1, R1, Q1) de construction identique à ladite unité de commutation, qui d'autre part est également raccordée au potentiel de référence et dont l'impédance (L2; L1) est raccordée à l'entrée de l'amplificateur de fréquence intermédiaire (ZFV), par l'intermédiaire d'un autre condensateur (C2).

3. Dispositif radar selon la revendication 1 ou 2, caractérisé en ce qu'il existe, dans le circuit d'évaluation (AS), un générateur de signaux, dont le signal de sortie (z), qui présente la fréquence de répétition des impulsions (prf), est appliqué d'une part à l'entrée de commande de l'émetteur (SEND), par l'intermédiaire du circuit de retard (V1), et d'autre part à l'entrée d'un étage multivibrateur (MF) monostable, dont le signal de sortie (w) commande le commutateur (S1; S2).

4. Dispositif radar selon la revendication 3, caractérisé en ce que l'étage multivibrateur (MF) monostable est connecté en aval d'un second circuit de retard (V2).

5. Dispositif radar selon l'une des revendications 1 à 4, caractérisé en ce que le temps (t) pendant lequel le circuit à sources de courant agit comme source de courant (Q1 ou Q2), inclut entièrement le temps d'impulsion (ts) du signal d'émission (s).

FIG.1

FIG. 3

FIG. 2

9